Europäisches Patentamt

European Patent Office

Office européen des brevets

(19)

(11) Veröffentlichungsnummer: **0 026 874**
A1

# (12) EUROPÄISCHE PATENTANMELDUNG

(21) Anmeldenummer: 80105708.4

(22) Anmeldetag: 23.09.80

(51) Int. Cl.³: **B 01 F 15/04**, B 29 B 1/04

(30) Priorität: 05.10.79 DE 2940442

(43) Veröffentlichungstag der Anmeldung: 15.04.81
Patentblatt 81/15

(84) Benannte Vertragsstaaten: **AT BE CH DE FR GB IT LI LU NL SE**

(71) Anmelder: **Elastogran Maschinenbau GmbH & Co., Mitterstrassweg, D-8021 Strasslach vor München (DE)**

(72) Erfinder: **Kelterbaum, Manfred, Toelzer Strasse 8, D-8021 Strasslach (DE)**

(74) Vertreter: **Sand, Jakob, Dr., c/o BASF Aktiengesellschaft Carl-Bosch-Strasse 38, D-6700 Ludwigshafen (DE)**

(54) Einrichtung zur Vergleichsmessung und Aussteuerung der Komponentenströme bei Mischvorrichtungen für Mehrkomponenten-Kunststoffe.

(57) Bei der Herstellung von Mehrkomponenten-Kunststoffen wird zur Erzielung eines gewünschten Arbeitsdruckes in der eingestellten Relation der Kunststoffkomponenten und damit zur genauen Einhaltung vorgegebener Mengen und Mischungsverhältnisse eine Einstellung der die Komponenten fördernden Dosieraggregate bzw. eine Aussteuerung der Komponentenströme vorgenommen. Dazu werden die Kunststoffkomponenten mittels eines Dosieraggregats (2) von Vorratsbehältern (1) wahlweise in eine Mischkammer (4) (erste Stellung), über eine Rückführleitung (10) wieder in den Vorratsbehälter (1) (zweite Stellung) oder durch ein Testrohr (8) (dritte Stellung) gefördert. Die Einstellung des gewünschten Förderdruckes der Komponenten erfolgt durch eine in der Druckleitung des Dosieraggregats (2) angeordnete Drossel (6).

Elastogran Maschinenbau
GmbH + Co.

O.Z.0192/02033

0026874

**Einrichtung zur Vergleichsmessung und Aussteuerung der Komponentenströme bei Mischvorrichtungen für Mehrkomponenten-Kunststoffe**

Die Erfindung bezieht sich auf eine Einrichtung zur Vergleichsmessung und Aussteuerung der Komponentenströme bei Mischvorrichtungen für Mehrkomponenten-Kunststoffe, insbesondere Polyurethan, mit einem Dosieraggregat für jede Kunststoffkomponente und einer Mischkammer, die Eintrittsöffnungen für die einzelnen Komponenten und eine Austrittsöffnung für das Komponentengemisch besitzt.

Bei der Herstellung der Komponentengemische traten bisher insofern Schwierigkeiten auf, als bei gleichzeitigem Anlauf der Dosieraggregate sich der Arbeitsdruck in der eingestellten Relation der Komponenten, insbesondere aufgrund unterschiedlicher Viskositäten, ungleich aufbaut. Es baut schneller den Arbeitsdruck die mengenmäßig größere und außerdem die niedrig viskosere Komponente auf. Dies führte beim Anlauf und ebenso beim Abstellen der Mischvorrichtungen zu Mischungsfehlern der Komponenten, also beim Anlauf oder beim Abstellen der Vorrichtung zu einer schädlichen Gemischveränderung.

Zur Erzielung eines zeitlich gleichen Arbeitsdruckes wurde schon versucht, in die Druckleitung zwischen Dosieraggregat und Mischkammer sogenannte Speicherkolben einzubauen. Dazu mußte jedoch durch Herstellung von Schaumstoffprobestücken festgestellt werden, ob die Komponenten gleichzeitig in die Mischkammer einströmen. Um einen gleichzeitigen Eintritt der Komponenten zu erreichen war es oft notwendig, eine Reihe von Probestücken anzufertigen, bis eine einwandfreie Oberfläche das gleichzeitige Eintreten der Komponenten in die Mischkammer anzeigte. Diese Einstellungsmethode hat sich als sehr umständlich und zeit-

Wr/BL

0026874

aufwendig erwiesen und stellt zudem hohe Anforderungen an
das Bedienungspersonal.

Weiterhin ist es bekannt, zur Aussteuerung des Vorlaufs
der Komponenten in die Druckleitung der hochviskosen Komponente ein Kontaktmanometer einzubauen, welches den Anlauf
der niedrig viskosen Komponente steuern soll. Dieses Prinzip hat sich jedoch nicht durchgesetzt, da die Temperaturabhängigkeit der Viskosität der zweiten Komponente
dabei unberücksichtigt bleibt.

Aufgabe der Erfindung war es, eine Einrichtung zur Vergleichsmessung und Aussteuerung der Komponentenströme bei
Mischvorrichtungen für Mehrkomponenten-Kunststoffe, insbesondere Polyurethan, zu schaffen, bei der das gleichzeitige Eintreten der Komponenten in die Mischkammer schnell
und sicher erreicht werden kann und die eine exakte Feststellung der in die Mischkammer tatsächlich eingebrachten Komponentenmengen ermöglicht.

Diese Aufgabe wird grundsätzlich dadurch gelöst, daß in
der Druckleitung des Dosieraggregats jeder Komponente ein
Manometer sowie eine Drossel angeordnet sind und daß mittels Absperrorganen vor der Mischkammer, in einem Testrohr
und in einer Rückführleitung der Komponentenstrom in einer
ersten Stellung zur Mischkammer, in einer zweiten Stellung
über die Rückführleitung zu einem Vorratsbehälter und in
einer dritten Stellung durch das Testrohr förderbar ist.

Die erfindungsgemäße Einrichtung ist derart aufgebaut und
angeordnet, daß der Dosier- und Mischvorgang nicht behindert wird. Es können ferner Kunststoffkomponenten mit den
unterschiedlichsten Eigenschaften, beispielsweise solche
mit unterschiedlichen Viskositäten, exakt dosiert und gemessen und damit vorgegebene Mengen und Mischungsverhält-

nisse genau eingehalten werden, was letztlich für die Qualität der Endprodukte von entscheidender Bedeutung ist.

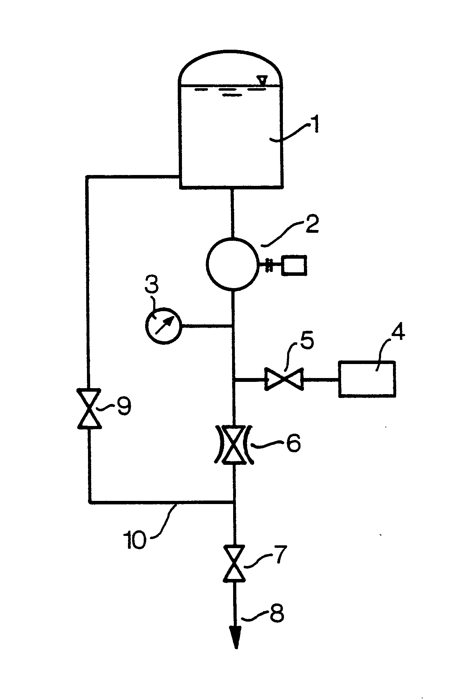

Im folgenden wird die Erfindung unter Hinweis auf die Zeichnung anhand eines Ausführungsbeispiels näher erläutert.

Die im Vorratsbehälter (1) befindliche Kunststoffkomponente wird mittels eines Dosieraggregats (2), z.B. mittels einer Axialkolbenpumpe, wahlweise in die Mischkammer (4), über eine Rückführleitung (10) wieder in den Vorratsbehälter oder durch ein Testrohr (8) gefördert. Unmittelbar nach dem Dosieraggregat sind in der Druckleitung ein Manometer (3) und nachfolgend eine Drossel (6) angeordnet. Als Drossel können allgemein solche Ventile oder Schieber in Betracht kommen, durch die der Komponentendruck geregelt und die Strömungsgeschwindigkeit der Komponente bis zum engsten Drosselquerschnitt verändert werden kann. Mit (5) ist das Absperrorgan vor der Mischkammer (4) bezeichnet, welches so angeordnet ist, daß der Komponentenstrom zur Drossel (6) nicht behindert wird. Im Anschluß an die Drossel ist ein durch das Absperrorgan (7) verschließbares Testrohr (8) vorgesehen. Zwischen diesem Absperrorgan und der Drossel führt eine durch ein weiteres Absperrorgan (9) verschließbare Rückführleitung (10) zum Vorratsbehälter (1) der Kunststoffkomponente. Sämtliche Absperrorgane sind vorzugsweise pneumatisch oder hydraulisch betätigbar.

Die von dem Dosieraggregat (2) geförderte Komponente wird in einer ersten Stellung über ein Manometer (3) der Mischkammer (4) zugeführt, wobei die Absperrorgane (7) und (9) geschlossen sind, während das Absperrorgan (5) geöffnet ist. Der Förderdruck der Komponente wird dabei auf dem Manometer (3) festgestellt oder beispielsweise mit Hilfe eines Schleppzeigers festgehalten.

0026874

Für den Einstellvorgang bzw. die Aussteuerung des Komponentenstroms wird das Absperrorgan (9) geöffnet und die Absperrorgane (5) und (7) geschlossen. Die von dem Dosieraggregat (2) geförderte Komponente wird nun über das Manometer (3) und die Drossel (6) zum Vorratsbehälter (1) zurückgeführt, wobei durch die Drossel der in der ersten Stellung ermittelte Förderdruck eingestellt wird.

Die Vergleichsmessung wird bei geöffnetem Absperrorgan (7) und bei geschlossenen Absperrorganen (5) und (9) durchgeführt. Die Komponente kann in dieser Stellung der Absperrorgane aus dem Testrohr (8) ausfließen und es kann die pro Zeiteinheit geförderte Komponentenmenge festgestellt werden.

Auf diese Weise ist es möglich, besonders einfach herauszufinden, welche Einstellung der Dosieraggregate für die zu verarbeitenden Kunststoffkomponenten bzw. für die herzustellenden Komponentengemische am günstigsten ist.

Patentanspruch

Einrichtung zur Vergleichsmessung und Aussteuerung der Komponentenströme bei Mischvorrichtungen für Mehrkomponenten-Kunststoffe, insbesondere Polyurethan, mit einem Dosieraggregat (2) für jede Kunststoffkomponente und einer Mischkammer (4), die Eintrittsöffnungen für die einzelnen Komponenten und eine Austrittsöffnung für das Komponentengemisch besitzt, dadurch gekennzeichnet, daß in der Druckleitung des Dosieraggregats (2) jeder Komponente ein Manometer (3) sowie eine Drossel (6) angeordnet sind und daß mittels Absperrorganen (5) vor der Mischkammer (4), (7) in einem Testrohr (8) und (9) in einer Rückführleitung (10) der Komponentenstrom in einer ersten Stellung zur Mischkammer, in einer zweiten Stellung über die Rückführleitung zu einem Vorratsbehälter (1) und in einer dritten Stellung durch das Testrohr förderbar ist.

Zeichn.

Europäisches
Patentamt

**EUROPÄISCHER RECHERCHENBERICHT**

0026874

Nummer der Anmeldung

EP 80 10 5708

| **EINSCHLÄGIGE DOKUMENTE** | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | US - A - 3 915 437 (LAMMERS et al.)<br><br>* Spalte 1, Zeilen 20-68; einzige Figur *<br><br>---- | anspruch | B 01 F 15/04<br>B 29 B 1/04 |

RECHERCHIERTE
SACHGEBIETE (Int. Cl.³)

B 01 F
B 29 B

KATEGORIE DER
GENANNTEN DOKUMENTE

X: von besonderer Bedeutung

A: technologischer Hintergrund

O: nichtschriftliche Offenbarung

P: Zwischenliteratur

T: der Erfindung zugrunde
liegende Theorien oder
Grundsätze

E: kollidierende Anmeldung

D: in der Anmeldung angeführtes
Dokument

L: aus andern Gründen
angeführtes Dokument

&: Mitglied der gleichen Patentfamilie, übereinstimmendes
Dokument

Der vorliegende Recherchenbericht wurde für alle Patentansprüche erstellt.

| Recherchenort | Abschlußdatum der Recherche | Prüfer |
|---|---|---|
| Den Haag | 06-01-1981 | SALA |

EPA form 1503.1  06.78